# EUROPÄISCHE PATENTANMELDUNG

(11) **EP 0 802 087 A1**
(43) Veröffentlichungstag der Anmeldung: **22.10.1997**
(21) Anmeldenummer: 97103509.2
(22) Anmeldetag: 04.03.1997
(51) Int. Cl.: B60R 21/13, B60R 22/18

(54) **Kraftfahrzeug mit Überrollbügel**

(30) Priorität: 20.04.1996 DE 29607200 U
(71) Anmelder: Russin, Jutta, 41468 Neuss (DE)
(72) Erfinder: Russin, Jutta, 41468 Neuss (DE)
(74) Vertreter: Albrecht, Ralf, Dipl.-Ing.

(57) **Zusammenfassung**

Die Erfindung betrifft ein Automobil (1) mit Vordersitzen (2, 3) und mit dahinter jeweils nahe der Innenseiten angeordneten, vertikal hochstehenden Halterohren (9, 10̸), an denen Sicherheitsgurteinrichtungen (13, 14) angebracht sind, und ist dadurch gekennzeichnet, daß die Halterohre (9, 10̸) durch einen von ihnen hochstehenden Bügel (15) verbunden sind.

## Beschreibung

Die Erfindung betrifft ein Automobil mit Vordersitzen und mit dahinter jeweils nahe der Innenseiten angeordneten, vertikal hochstehenden Halterohren, an denen Sicherheitsgurteinrichtungen angebracht sind.

Bei offenen Automobilen, wie Cabriolets und hier insbesondere Roadstern, ist die Anordnung und Führung der Sicherheitsgurte nicht unproblematisch, da in der Regel keine B-Säulen, an denen die Sicherheitsgurte körpergerecht hochgeführt und umgelenkt werden können, vorhanden sind. Bei einem bekannten Roadster-Typ (Z3 der Bayrischen Motorenwerke AG) sind hinter den Vordersitzen und nahe der Innenseite vertikal hochstehende Halterohre angebracht, die untenseitig über ein Horizontalrohr miteinander verbunden sind. An diesem Horizontalrohr sind Gurtroller angebracht. Von den Gurtrollern verlaufen die Sicherheitsgurte zu Umlenkbügeln, die im oberen Bereich der Halterohre angelenkt sind, und zwar so hoch, daß die Sicherheitsgurte in einer einwandfreien Position zu den Vorderseiten der Vordersitze geführt werden können. Die Halterohre sind mit domartigen Kunststoffverkleidungen abgedeckt.

Vor allem bei zweisitzigen Cabrios besteht häufig das Bedürfnis, hinter den Vordersitzen einen sich quer zur Fahrtrichtung erstreckenden Bügel anzubringen, und zwar teils aus optischen und teils aus Sicherheitsgründen. Damit sie auch tatsächlich eine Schutzwirkung entfalten, müssen solche Bügel über Verstrebungen bis hin zur Bodengruppe befestigt und abgestützt werden. Die Herstellung eines solchen Bügelsystems und dessen Anbringung im Automobil ist deshalb aufwendig und teuer.

Der Erfindung liegt die Aufgabe zugrunde, einen Bügel bei einem Automobil der eingangs genannten Art so auszubilden und anzuordnen, daß er einfach ausgestaltet und für seinen Einbau möglichst geringe Kosten entstehen.

Diese Aufgabe wird erfindungsgemäß dadurch gelöst, daß die Halterohre durch einen von ihnen hochstehenden Bügel verbunden sind, und zwar vorzugsweise so, daß er wenigstens in Höhe der Oberkante von Kopfstützen der Vordersitze, zweckmäßigerweise noch etwas höher, verläuft und die oberen Enden der Halterohre verbindet. Dieser Maßnahme liegt der schon zur Erfindung gehörende Gedanke zugrunde, daß die vorhandenen Halterohre aufgrund ihrer Funktion als Halterungen für die Umlenkeinrichtungen zwecks Führung der Sicherheitsgurte im Ernstfall hohe Kräfte aufnehmen müssen und sich deshalb vorzüglich dazu eignen, an ihnen den Bügel anzubringen und damit den Halterohren eine Doppelfunktion zuzuweisen. Für den Bügel selbst reicht eine einfache Formgebung aus, wobei sich dessen Montage in der Verbindung des Bügels mit den Halterohren erschöpft, also einfach und kostengünstig durchgeführt werden kann. Selbstverständlich schließt dies nicht aus, zusätzliche Verstrebungen vorzusehen, sollten sie aus optischen oder Sicherheitsgründen gewünscht sein.

Ein weiterer Nutzen besteht darin, daß der Fahrzeugkörper durch die zusätzliche Verbindung der Halterohre nicht unerheblich versteift wird, was gerade bei offenen Automobilen wegen deren gegenüber Limousinen geringeren Stabilität erwünscht ist.

Der Bügel ist aus Gewichtsgründen vorzugsweise als Bügelrohr ausgebildet. Als Werkstoff kommen aus Korrosionsgründen insbesondere rostfreier Stahl oder eine Aluminiumlegierung in Frage. Die Formgebung des Bügels kann optischen oder Sicherheitsgründen angepaßt werden. In einfacher und bewährter Ausbildung verläuft der Bügel zwischen den Halterohren im wesentlichen horizontal.

Gemäß einem weiteren Merkmal der Erfindung ist vorgesehen, daß der Bügel vertikale Endschenkel aufweist. Deren Befestigung an den Halterohren kann auf verschiedene Weise erfolgen. Eine besonders einfache und stabile Befestigung ist dann möglich, wenn Halterohre und Endschenkel teleskopisch ineinandergesteckt werden, indem beispielsweise die Endschenkel über die Halterohre gestülpt oder in diese hineingesteckt werden. Die Endschenkel können dann über Verbindungsmittel an den Halterohren befestigt werden, beispielsweise über Querverschraubungen.

Die Endschenkel sind vorzugsweise über Bögen an dem übrigen Teil des Bügels angeformt, da hierdurch ein besonders harmonisches Aussehen erreicht wird und scharfe Kanten vermieden werden. Zwischen den Endschenkeln und den Halterohren können Distanzhülsen vorgesehen werden, um eventuelle Toleranzen ausgleichen zu können und Geräusche zu vermeiden.

Die Halterohre sind in an sich bekannter Weise mit einer domartigen Verkleidung abgedeckt, so daß sie nicht sichtbar sind, also die Verbindung zwischen den Halterohren und dem Bügel verborgen ist, wodurch eine besonders ästhetische Lösung erzielt wird.

In der Zeichnung ist die Erfindung anhand eines Ausführungsbeispiels näher veranschaulicht. Es zeigen:
- Figur 1: eine Rückansicht eines in einem Roadster angebrachten Bügels;
- Figur 2: eine vergrößerte Schnittdarstellung des linken Teils des Bügels mit Halterohr gemäß Figur 1 und
- Figur 3: einen Schnitt durch den Bügel mit Halterohr gemäß Figur 2 in der Ebene A-A.

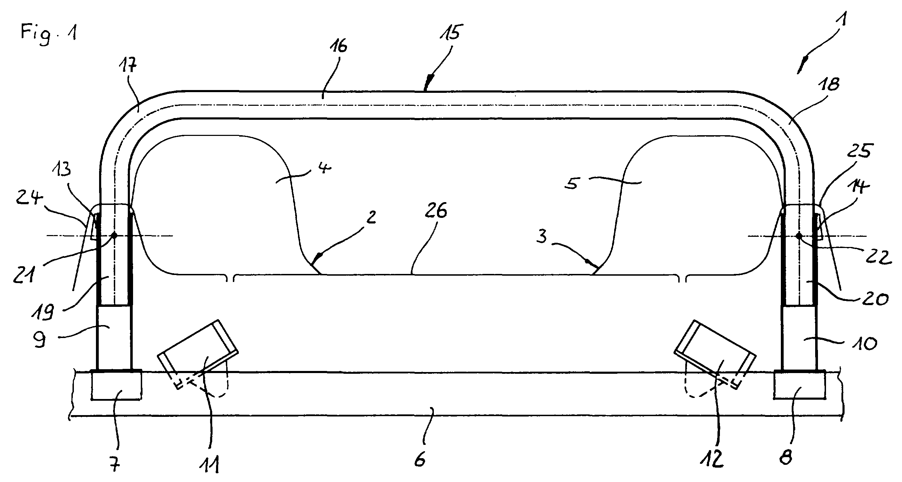

Figur 1 zeigt einen Roadster 1 von hinten, wobei jedoch das Heck und die Seitenwandungen wie alle übrigen Teile, die für die Beschreibung der Erfindung nicht erforderlich sind, weggelassen sind. Der Roadster hat zwei Vordersitze 2, 3, welche angeformte Kopfstützen 4, 5 aufweisen.

Hinter den Vordersitzen verläuft ein Horizontalrohr 6 bis zu den jeweiligen Innenseiten der Karosserie. Im Bereich der äußeren Enden des Horizontalrohrs 6 sind Böcke 7, 8 angeschweißt, von denen Halterohre 9, 10̸ vertikal hochstehen. Die Halterohre 9, 10̸ sind mit dem jeweils zugehörigen Bock 7 bzw. 8 verschweißt.

An dem Horizontalrohr 6 sind jeweils innenseitig Gurtroller 11, 12 angebracht, auf denen Teile der hier nicht dargestellten Sicherheitsgurte aufgespult sind. Die Anbringung ist so, daß die von den Gurtrollern 11, 12 ausgehenden Sicherheitsgurte zum oberen Ende der Halterohre 9, 10̸ gerichtet sind. Dort sind Umlenkbügel 13, 14 angelenkt, über die die Sicherheitsgurte in die Horizontale umgelenkt werden, so daß sie an den Außenseiten der Kopfstützen 4, 5 nach vorn laufen. An den Kopfstützen 4, 5 werden sie durch ösen geführt, die gleichzeitig auch Stopper für die Sicherheitsgurtlaschen bilden.

Die oberen Enden der Halterohre 9, 10̸ sind über einen U-förmigen Bügel 15 miteinander verbunden. Der Bügel 15 hat einen Horizontalabschnitt 16, der oberhalb der Kopfstützen 4, 5 verläuft. An den Horizontalabschnitt 16 schließen sich Bogenabschnitte 17, 18 an, die sich in gerade, vertikal verlaufende Endschenkel 19, 20̸ fortsetzen. Diese Endschenkel 19, 20̸ sind in die Halterohre 9, 10̸ bis etwa zu ihrer Hälfte eingesteckt und über hier nicht eingezeichnete Querschrauben miteinander verbunden, die miteinander fluchtende Schraubenlöcher 21, 22 durchfassen.

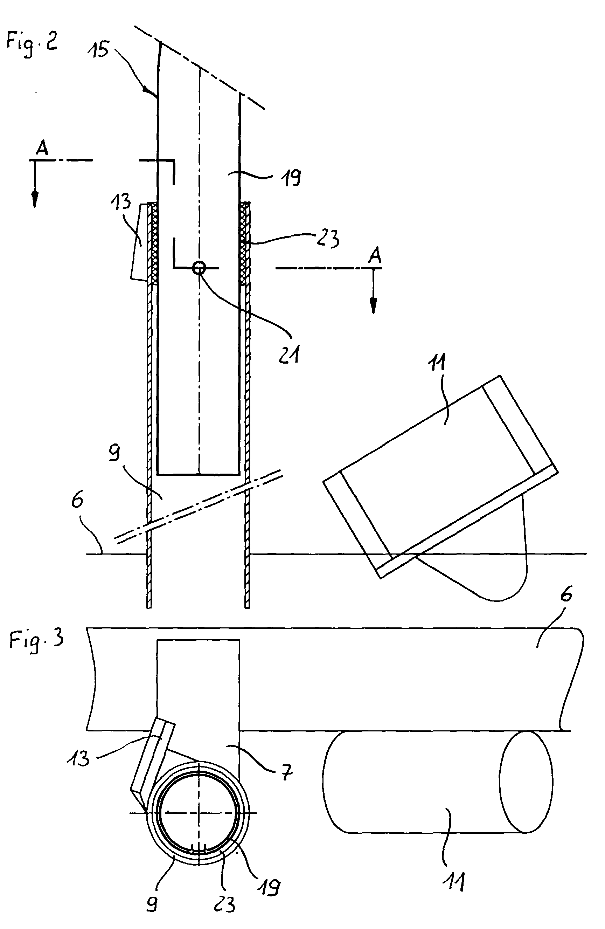

Wie sich insbesondere aus Figur 2 ersehen läßt, ist zwischen den Endabschnitten 19, 20̸ und den Halterohren 9, 10̸ eine Distanzbuchse 23 angeordnet, die Toleranzen auszugleichen in der Lage ist und zudem das Entstehen von Geräuschen vermeidet. Außerdem sind die Halterohre 9, 10̸ durch Verkleidungsdome 24, 25 abgedeckt. Die Verkleidungsdome 24, 25 werden durch eine weitere Verkleidung 26 ergänzt, so daß die Halterohre 9, 10̸ mit den Umlenkbügeln 13, 14 sowie das Horizontalrohr 9 mit den Gurtrollern 11, 12 verdeckt sind.

## Patentansprüche

1. Automobil (1) mit Vordersitzen (2, 3) und mit dahinter jeweils nahe der Innenseiten angeordneten, vertikal hochstehenden Halterohren (9, 10̸), an denen Sicherheitsgurteinrichtungen (13, 14) angebracht sind,
dadurch gekennzeichnet, daß die Halterohre (9, 10̸) durch einen von ihnen hochstehenden Bügel (15) verbunden sind.

2. Automobil nach Anspruch 1,
dadurch gekennzeichnet, daß der Bügel (15) als Bügelrohr ausgebildet ist.

3. Automobil nach Anspruch 1 oder 2,
dadurch gekennzeichnet, daß der Bügel (15) wenigstens in Höhe der Oberkanten von Kopfstützen der Vordersitze verläuft.

4. Automobil nach einem der Ansprüche 1 bis 3,
dadurch gekennzeichnet, daß der Bügel (15) zwischen den Halterohren (9, 10̸) im wesentlichen horizontal verläuft.

5. Automobil nach einem der Ansprüche 1 bis 4,
dadurch gekennzeichnet, daß der Bügel (15) vertikale Endschenkel (19, 20̸) aufweist, die über die Halterohre (9, 10̸) gestülpt oder in diese hineingesteckt sind.

6. Automobil nach Anspruch 5,
dadurch gekennzeichnet, daß die Endschenkel (19, 20̸) über Bögen (17, 18) an dem übrigen Teil (16) des Bügels (15) angeformt sind.

7. Automobil nach Anspruch 5 oder 6,
dadurch gekennzeichnet, daß die Endschenkel (19, 20̸) und die Halterohre (9, 10̸) über Querverschraubungen miteinander verbunden sind.

8. Automobil nach einem der Ansprüche 1 bis 7,
dadurch gekennzeichnet, daß zwischen Endschenkeln (19, 20̸) und Halterohren (9, 10̸) eine Distanzbuchse (23) angeordnet ist.

9. Automobil nach einem der Ansprüche 1 bis 8,
dadurch gekennzeichnet, daß die Halterohre (9, 10̸) verkleidet sind.

10. Automobil nach einem der Ansprüche 1 bis 9,
dadurch gekennzeichnet, daß die Sicherheitsgurteinrichtungen als Umlenkeinrichtungen (13, 14) für die Sicherheitsgurte ausgebildet sind.
